# EUROPEAN PATENT APPLICATION

(11) **EP 1 921 549 A1**
(43) Date of publication of application: **14.05.2008**
(21) Application number: 07120140.4
(22) Date of filing: 07.11.2007
(51) Int. Cl.: G06F 17/30

(54) **Website visitor coordination system and method**

(30) Priority: 09.11.2006 US 858136 P; 05.04.2007 US 732886
(71) Applicant: Site Acuity,LLC, 07901 NJ (US)
(72) Inventor: Maddox, William Keith, Short Hills, NJ 07078 (US)
(74) Representative: Bongen, Renaud & Partner

(57) **Abstract**

A website visitor coordination method includes receiving a request for an electronic document from a user device and providing the electronic document in response. The electronic document includes executable code which searches for, and stores to, a user device visitor identification information. The code also sends data containing visitor information, such as visitor identification and a history of the webpages visited to a provider system. The provider system receives the data and, when necessary, provides a new visitor identifier to assign and transmits the new visitor identifier back to the user device. The visitor identifier is automatically incorporated in the electronic document upon the receipt, displayed on the user device, and stored for retrieval on subsequent requests for electronic documents. When a phone call is received from a website visitor, the call is associated with the visitor identifier, thus connecting the caller with the history of webpages viewed.

## Description

### Related Application

This application claims the benefit under 35 U.S.C. 119 (e) of U.S. Patent Application Serial No. 60/858,136, entitled WEBSITE VISITOR COORDINATION SYSTEM AND METHOD, filed November 9, 2006, and U.S. Patent Application Serial No. 11/732,886, entitled WEBSITE VISITOR COORDINATION SYSTEM AND METHOD, filed April 5, 2007, the entire disclosures of which are hereby incorporated by reference herein.

### Field of the Invention

The present invention relates generally to marketing methodology, and more particularly to managing on-line website visitor information with off-line customer contact information.

### Background of the Invention

Vendors have printed substantially unique customer numbers on direct mail catalogs for some time. When a potential customer contacts a vendor, the vendor requests the customer number. This allows the vendor to associate the contact (e.g., telephone call) with a previously known account (associated with the catalog provided customer number), such as for marketing purposes.

### Summary of the Invention

A method for correlating an electronic document request with a telephone contact, including receiving a request for the electronic document from a user device; providing the requested electronic document to the user device, wherein the electronic document contains user device executable code; receiving data from the user device responsively to the user device executing the user device executable code; providing an identifier to the user device dependently upon the received data, wherein the provided identifier is automatically incorporated into the provided electronic document upon receipt thereof at the user device; receiving a telephone call; and associating the telephone call with the provided identifier.

### Brief Description of the Figures

Understanding of the present invention will be facilitated by consideration of the following detailed description of the preferred embodiments of the present invention taken in conjunction with the accompanying drawings, in which like numerals refer to like parts and in which:

FIG. 1 illustrates an exemplary webpage according to an embodiment of the present invention;

FIG. 2 illustrates an exemplary webpage according to an embodiment of the present invention;

FIG. 3 illustrates a block diagram of a first phase of a methodology according to an embodiment of the present invention;

FIG. 4 illustrates a block diagram of a second phase of a methodology according to an embodiment of the present invention;

FIG. 5 illustrates a system that may be used to perform the second phase of the methodology of Fig. 4;

FIG. 6 illustrates block diagram of a first phase of a methodology according to an embodiment of the present invention; and

FIG. 7 illustrates a block diagram of a second phase of a methodology according to an embodiment of the present invention;

### Detailed Description of the Invention

It is to be understood that the figures and descriptions of the present invention have been simplified to illustrate elements that are relevant for a clear understanding of the present invention, while eliminating, for purposes of clarity, many other elements found in typical information management methods and systems. However, because such elements are well known in the art, and because they do not facilitate a better understanding of the present invention, a discussion of such elements is not provided herein. The disclosure herein is directed to all such variations and modifications known to those skilled in the art.

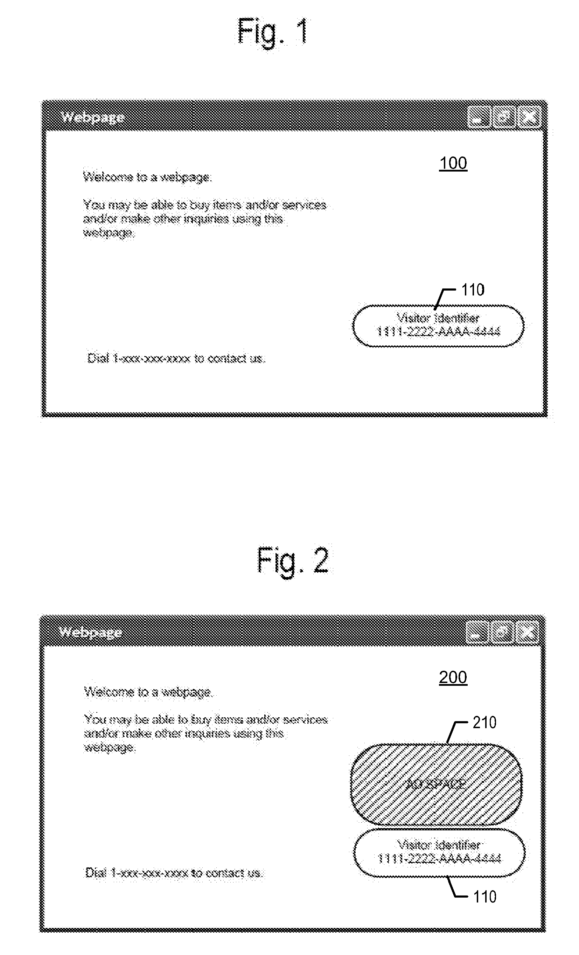

Figs. 1 and 2 illustrate exemplary webpages 100, 200 that may be integrated into websites according to embodiments of the present invention. "Website", as used herein, generally refers to a collection of electronic documents (e.g., webpages) that are available via a computer network, such as the global interconnection of computers and computer networks commonly referred to as the Internet. By way of non-limiting example, a website may be accessed at a given address on the World Wide Web, and include a home page, which is the first webpage visitors see when they enter the site. A website may also contain additional webpages. Webpages may be fixed, and/or dynamically generated in response to website visitor webpage requests. By way of further non-limiting example only, the World Wide Web is a system of Internet servers that support HTML (Hypertext Markup Language), such that a website visitor can jump from one webpage to another webpage simply by clicking on hot spots (*i.e.,* links). Web browsing applications, such as Netscape Navigator and Microsoft's Internet Explorer, are commercial applications used to access websites on the World Wide Web. Other computer network types and/or protocols and/or mark up languages and/or applications may be used.

According to an embodiment of the present invention, served webpages may appear conventional to website visitors, except for the inclusion of a "visitor identifier" 110 or other substantially unique identifier. Each visitor identifier 110 is associated with a particular website visitor and/or visitor computer. Visitor identifiers are preferably maintained across multiple pages of a website. In the non-limiting, illustrated embodiments of Figs. 1 and 2, the visitor identifier 110 takes the form of 1111-2222-AAAA-4444. Any unique or substantially unique identifier can be used. The embodiment of Fig. 2 additionally includes optional advertising space 210, or webpage real-estate, associated with the visitor identifier. While illustrated above the visitor identifier, the provided real estate 210 may be to the left, right, top or bottom thereof, but is preferably proximate (such as by being adjacent) thereto.

In one embodiment of the present invention, a website provider may be charged to incorporate the tracking system and methodology of the present invention into one or more websites. Additionally, or in lieu thereof, the tracking system and methodology disclosed herein may be provided to a website provider in exchange for the advertising space, or real estate, shown in Fig. 2, and the availability thereof for advertisement insertion by third parties. A provider of the tracking system may charge these third-parties for targeted advertisement insertion thereat.

According to an embodiment of the present invention, two phases of methodology may be utilized. In the first phase, a visitor identifier may be displayed to a website visitor, such as is shown in Figs. 1 and 2. In the second phase, a potential customer may be prompted for the visitor identifier in an off-line communication, such that on-line marketing data may be bridged or linked with off-line marketing data.

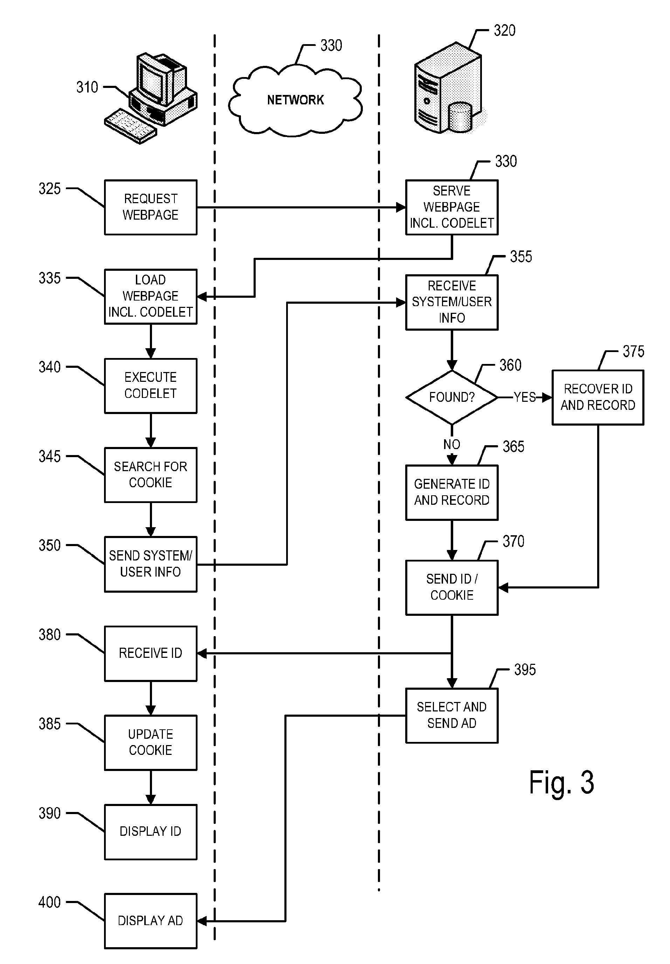

Fig. 3 shows a block diagram of a system and the first phase of a methodology according to an embodiment of the present invention. The system of Fig. 3 includes a plurality of website visitor computing devices 310 (such as personal computers (PCs), one of which is shown) and a provider system including computing devices 320 (such as servers, one of which is shown). "Computing device", as referred to herein, refers to a general purpose computing device that includes a processor. A processor generally includes a Central Processing Unit (CPU), such as a microprocessor. A CPU generally includes an arithmetic logic unit (ALU), which performs arithmetic and logical operations, and a control unit, which extracts instructions (e.g., code) from memory and decodes and executes them, calling on the ALU when necessary. "Server", as used herein, generally refers to a computing device communicatively coupled to a network and that manages network resources. A server may refer to a discrete computing device, or may refer to an application that is managing resources rather than the entire computing device. The website visitor computing devices 310 and provider computing devices 320 are commucatively coupled to one-another, such as via a computing network 330, like the Internet.

The methodology of Fig. 3 begins with a website visitor requesting a webpage, as indicated at block 325, such as by entering an address (e.g., http://www. .com) into a web browsing application running on his associated computing device (e.g., a PC). The provider system responds by serving one or more corresponding webpages to the requesting website visitor computing device, as indicated at block 330. In an embodiment of the present invention, the served webpage(s) include one or more embedded applications, e.g., codelets, that are subsequently executed by the requesting visitor's computing device 310 when the served webpage(s) are loaded, as indicated at blocks 335, 340. For non-limiting purposes of explanation, a codelet is a piece of processor executable code capable of performing some basic task, and may typically be compact or small compared with conventional personal computer executable applications, such as a web browser application.

The executing codelet searches the requesting website visitor's computing device 310 for data indicative of a prior visit to the served webpage(s), or other webpage(s) associated with the served webpage(s), such as another webpage of the website including the served webpages(s), as indicated at block 345. Such data may be embodied as a cookie for example. The executing codelet then sends data indicative of the search result, which may include visitor indicative information, or an indication of the lack of finding any data indicative of a prior visit, to the provider system 320, which in-turn receives the response, as indicated at blocks 350 and 355, respectively. For non-limiting purposes of explanation, a cookie is a message provided to a web browsing application by a web server. The browser typically stores the message in a text file on the browser executing computing device. A message is then sent back to the cookie providing server each time the browser requests a webpage from that server.

Upon receiving the response, at block 355, the provider system 320 searches available data for a matching visitor identification, e.g., one or more databases are searched, as indicated at block 360. If no matching record is found, a new record is created, as shown at block 365. As indicated at block 370, the provider system 320 then sends a matching (recovered at block 375) or created (at block 365) identifier, such as a cookie indicative thereof, to the requesting visitor's computing device 310, which is subsequently received by the executing codelet, as indicated by block 380. The codelet stores data indicative of the received identifier, such as on the requesting visitor's computing device 310, and displays the visitor identifier as part of the final displayed webpage (as is seen in Figs. 1 and 2), as indicated at blocks 385, 390.

Analogous methodology may be repeated for each webpage of a website that is requested, e.g., be intra-website in nature. Further, analogous methodology may be repeated across multiple websites, e.g., be inter-website in nature, such that the visitor identifiers are consistently maintained across multiple webpages of multiple websites.

Further, a history of visitor identifier incorporating webpages requested by a particular website visitor or website visitor computing device may be stored as individual data elements, e.g., cookies or click-stream data, such as on the requesting visitor's computing device, and/or be logged by the provider system when a webpage is served and a visitor identifier is assigned or found. In an embodiment of the invention, the provider system 320 may select and send an advertisement based on a visitor profile (such as the webpage history), as indicated at block 395. The visitor computing device 310 may then display the advertisement, as indicated by block 400, optionally as part of the received webpage, as is shown in Fig. 2, for example.

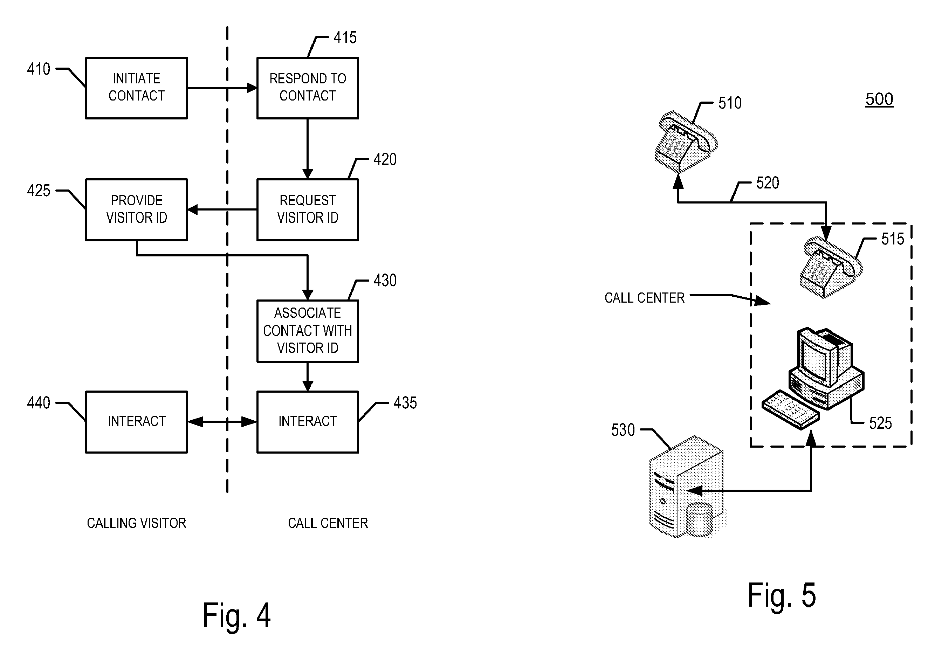

Fig. 4 illustrates a block diagram of the second phase of a methodology according to an embodiment of the present invention. As indicated at block 410, a website visitor contacts a call center such as by dialing a telephone number also displayed on one or more webpages served by the provider system. Call center personnel answer the telephone call, and request the visitor identifier associated with the calling customer (such as was displayed on one or more webpages), which the calling customer provides, as indicated at blocks 415, 420 and 425 respectively. The call center then associates the initiated contact (e.g., the telephone call) with the website visitor or visitor computing device, such that the calling customer is identified as a website visitor, and conventional interaction proceeds, as indicated at blocks 430, 435 and 440 respectively. This may involve a telephonic purchase being made, for example. Advantageously, such off-line customer action(s) may be associated with a same account associated with online actions taken by a website visitor, thereby bridging or linking on-line marketing data with off-line marketing data.

Fig. 5 illustrates a system 500 that may be used to perform the second phase, e.g., off-line, methodology of Fig. 4. It includes calling website visitor and call center telephones 510 and 515, respectively, that may be connected via a Plain Old Telephone Service (POTS) connection 520 for example. The call center also includes computing device(s) 525, such as PCs, that can access and store data in a visitor ID management system 530, thereby allowing the call center to associate a telephone call (and any action taken with regard thereto) with previous webpage requests of a website visitor.

Visitor ID management system 530 may incorporate one or more servers and database applications, for example. Visitor ID management system 530 may be shared across providers/call centers, or be specific to one or more providers/call centers. The database(s) may take the form of one or more SQL databases, for example. The database(s) may store data related to visitor identifiers, such as marketing data and data indicative of webpages served that incorporate the visitor identifiers, and other customer information.

Call center computing device(s) 525 may incorporate one or more call center computing device executable applications that access visitor ID management system 530. Such applications may enable call center personnel to view webpage(s) that a calling visitor (also a webpage requesting visitor) is viewing in real-time. For example, if a calling visitor were looking at webpage "X" on a website, the call center agent may type or otherwise enter the calling website visitor provided visitor identifier into the call center system, and thereafter have automatically served to his computing device to the same webpage "X" in an application window. This may be accomplished by recovering the stored history of visitor identifier incorporating webpages requested by a particular website visitor or website visitor computing device, or data indicative of at least a recent portion thereof, and requesting the last webpage served to the calling website visitor. If during that same conversation, the calling customer clicks on a link that takes him/her to page "Y", this may be captured in the history, or at least a recent portion thereof, and optionally used to "push" or "pull" page "Y" to the call center agent's application window. In this fashion, a call center agent can take a calling customer on a website "virtual tour", e.g., to find an item in an online catalog. Such applications may also enable a call center to store data in and recover data from the visitor lD management system database(s), thereby permitting call center personnel to store and recover data, such as marketing data, related a particular website visitor and/or website visitor computing device.

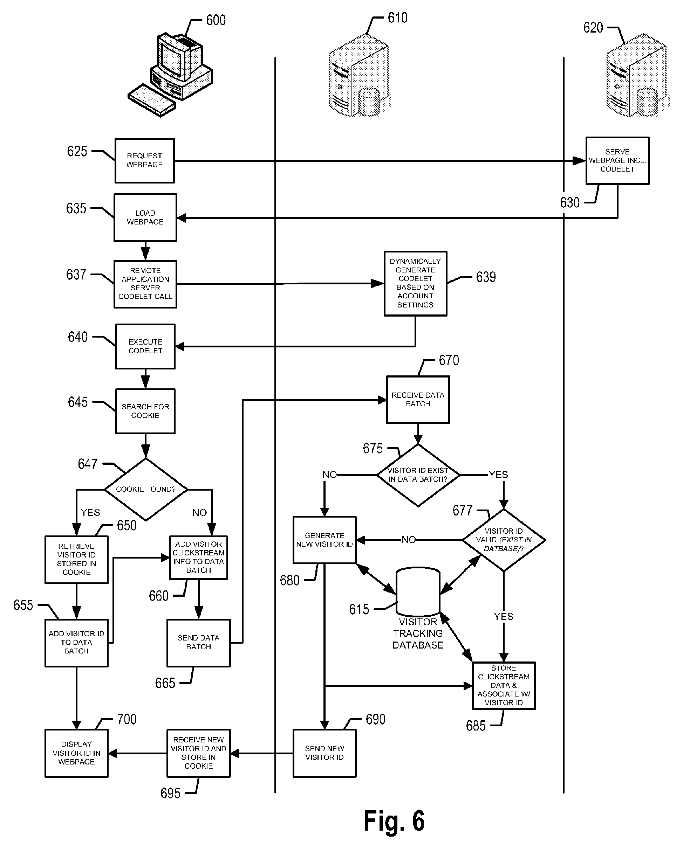

Fig. 6 shows another embodiment of the first phase of methodology according to another embodiment of the present invention. For exemplary purposes only, the illustrated provider's system 610 and website hosting server 620 are implemented on different physical computing devices. However, these systems can be implemented on a single physical computing device. The methodology of Fig. 6 begins with a website visitor requesting a webpage, such as by entering an address (*e.g*., http://www. .com) into a web browsing application running on his associated computing device (e.g., a PC) 600, as indicated at block 625. Web hosting server 620 responds by serving one or more corresponding webpages to the requesting website visitor computing device 600, as indicated by block 630. For non-limiting purposes of explanation, a web hosting server manages incoming requests from user computing devices for electronic documents such as webpages, stores such electronic documents and sends such electronic documents to the user computing devices, responsive to the incoming requests. The served webpage(s) may include one or more embedded applications, e.g., codelets, that are subsequently executed by the requesting visitor's computing device 600 when the served webpage(s) are loaded, as indicated at blocks 635, 640. At block 637, the webpage loaded at block 635 calls application server 620 to obtain the codelet. At block 639, application server 610 dynamically generates and sends the codelet called for at block 637 to device 600. According to an embodiment of the present invention, the codelet may be dynamically generated by server 610 based upon predetermined account settings associated with the calling webpage loaded at block 635. At block 640 the received codelet is executed.

The executing codelet searches the requesting website visitor's computing device 600 for a corresponding cookie, as indicated at block 645. If a corresponding cookie is found on the visitor's computing device 600, at block 647, the codelet retrieves visitor identification information stored in the cookie and adds it to a data batch or packet to be transmitted to the provider's system 610, as indicated by blocks 650 and 655. Thereafter, or if a corresponding cookie is not found on the visitor's computing device 600, at block 647, information indicative of the virtual trail of the visitor's activity on the Internet is added to a data batch or packet to be transmitted to the provider's system 610 at block 660. The virtual trail may include a history of webpages visited by the visitor on a website. It may also include a record of all the links on a given webpage selected by the visitor. The history may be limited to only the webpages visited on the website hosted by the website hosting server 620 or it may include all the webpages of all the websites visited by the visitor via the Internet. The history may also be customized to include only some of the webpages on only some of the websites visited by the visitor, depending on some predetermined criteria. Such data indicative of a virtual trail of a visitor is sometimes referred to as "clickstream" data or information.

As indicated at blocks 665 and 670, the visitor's computing device 600 sends the data batch, which is received by the provider's system 610. Upon receiving the data batch, the provider system 610 searches available data for a matching visitor identification, e.g., it searches the data batch received at block 670 and one or more visitor tracking databases 615, as indicated at block 675. If a visitor identifier does not exist in the data batch or no matching record is found in the visitor tracking databases 615 (as determined at block 675), a new record is created, as shown at block 680. If a visitor identifier is determined to exist in the data batch, but is determined to not be valid, at block 677, a new record is created, as shown at block 680. As indicated at block 690, the provider system 610 then sends a matching or created identifier (such as a cookie indicative thereof) to the requesting visitor's computing device 600. The matching or created identifier is subsequently received by the executing codelet and stored in a cookie on the requesting visitor's computing device 600 at block 695. The codelet displays the received identifier as a visitor identifier as a part of the final displayed webpage (as is seen in Figs. 1 and 2), as indicated at block 700.

Visitor tracking database 615, which may be a part of the provider's system 610, stores the visitor clickstream information received from the visitor's computing device 600. The database may take the form of a SQL database, for example. The database may also store data related to visitor identifiers, such as marketing data and data indicative of webpages served that incorporate the visitor identifiers. At block 685, clickstream data associated with the website visitor, or visitor's computer, is updated in database 615.

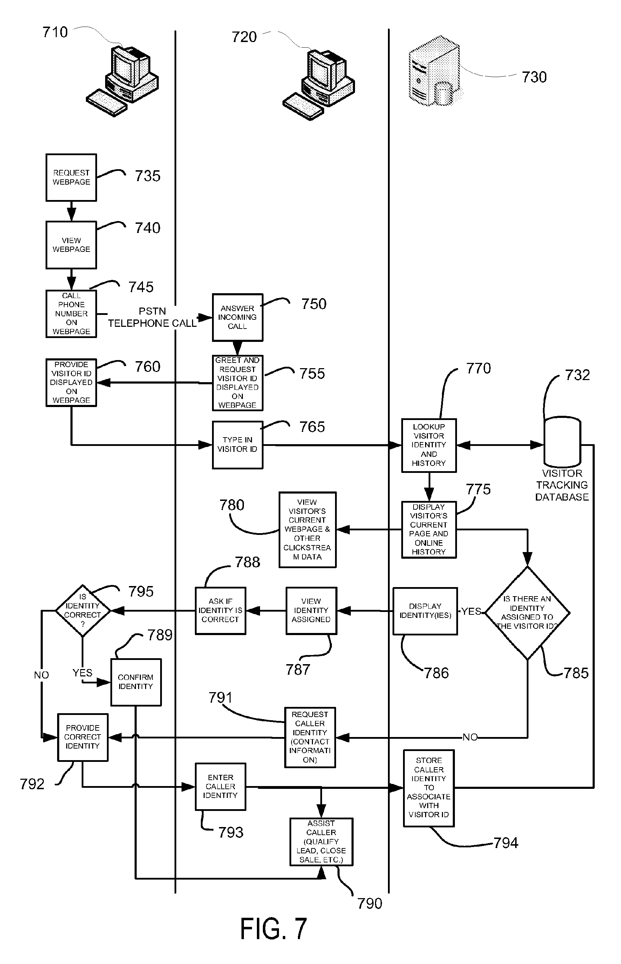

Fig. 7 shows a block diagram of another embodiment of the second phase of a methodology according to an embodiment of the present invention. Therein, a website visitor requests a webpage and views the provided webpage, indicated at blocks 735 and 740 using a device 710. The methodology depicted in Fig. 6 may be used to provide a webpage including visitor identification information. The webpage may be akin to that shown in Figs. 1 and/or 2. The website visitor then contacts a call center associated with the provider by dialing a telephone number displayed on the one or more webpages served by the provider system 730, as indicated at block 745. A call center agent responds to the incoming call, and requests the visitor identification information displayed on the webpage, as indicated at blocks 750 and 755. The visitor provides the call center agent with the visitor identification information displayed on the webpage, as indicated at block 760.

The call center agent then enters the visitor identification information into the call center system 720 at block 765, accessing the provider's system 730. The call center system 720 and the provider's system 730 may be located either at same physical location or at different physical locations. If the call center system 720 and the provider's system 730 are located at the same physical location, they may either be implemented on one or more same physical devices or on different physical devices. The call center system 720 and the provider's system 730 are depicted as two different systems for illustrative purposes only. When the call center agent enters the visitor identification information, the visitor identity and history are retrieved from the visitor tracking database 732, as indicated at block 770. The visitor tracking database 732 may be a part of the provider's system 730 or may be a separate system linked with the provider's system 730. Visitor tracking database 732 may be the same as database 615 (Fig. 6), or a duplicate thereof for example.

As indicated at blocks 775 and 780, the visitor's last requested webpage and clickstream data are identified and displayed on the call center system 720, and are viewed by the call center agent responding to the call made by the website visitor. The provider's system 730 verifies if there is an identity (e.g., name) associated with the website visitor, as indicated at block 785. If there is an identity associated with the website visitor in the provider's system 730, the visitor identity is displayed and viewed by the call center agent, as indicated at blocks 786 and 787. The call center agent asks the visitor if the identity is correct, as indicated at block 788. As indicated at block 795, if the visitor identity is correct, the visitor confirms her identity, as shown at block 789. The call center agent then assists the caller with her request, as indicated at block 790.

If there is no previous identity associated with the visitor in the visitor tracking database 732, as indicated at block 785, the call center agent requests the caller for contact information, as indicated at block 791, and the visitor provides her identity information, as indicated at block 792. Further, if the identity information provided by the provider's system 730 is not correct, as indicated at block 795, the visitor provides her correct identity information at block 792. Thereafter, the call center agent enters the contact information provided by the caller, as indicated by block 793. The caller contact information is associated with the visitor identity information and stored in the visitor tracking database 732, as indicated by block 794. The call center agent assists the caller with her request to complete the transaction desired by the caller, as indicated by block 790.

It will be apparent to those skilled in the art that modifications and variations may be made in the apparatus and process of the present invention without departing from the spirit or scope of the invention. It is intended that the present invention cover the modification and variations of this invention provided they come within the scope of the appended claims and their equivalents.

## Claims

**1.** A method for correlating an electronic document request with a telephone contact, comprising:
receiving a request for the electronic document from a user device;
transmitting the requested electronic document to said user device;
transmitting user device executable code associated with the requested electronic document to the user device;
receiving data from the user device responsively to the user device executing said user device executable code;
transmitting an identifier to the user device dependently upon the received data, wherein said identifier is automatically incorporated into said electronic document upon receipt thereof at the user device;
receiving a telephone call;
associating the telephone call with said identifier; and
displaying the identifier in conjunction with the associated telephone call.

**2.** The method of claim 1, further comprising the step of determining said identifier dependently upon said received data.

**3.** The method of claim 2, further comprising the step of storing at least some of the received data.

**4.** The method of claim 3, wherein click-stream data is stored in a database.

**5.** The method of claim 1, further comprising:
selecting a predetermined content for said electronic document based on said identifier; and
sending said predetermined content for said electronic document to said user device.

**6.** The method of claim 5, wherein said predetermined content is an advertisement.

**7.** The method of claim 1, wherein the received data is associated with a cookie stored at the user device.

**9.** The method of claim 1, wherein the received data includes information regarding at least one webpage served to the user device.

**10.** The method of claim 9, further comprising storing the received data remote from the user device.

**11.** The method of claim 10, wherein said received data is stored in a database.

**12.** The method of claim 1, further comprising:
receiving a request for the electronic document from a second user device;
transmitting the requested electronic document to said second user device;
transmitting the user device executable code associated with the requested electronic document to the second user device;
receiving data from the second user device responsively to the second user device executing said user device executable code;
transmitting a second identifier to the second user device dependently upon the data received from the second user, wherein said second identifier is automatically incorporated into said electronic document upon receipt thereof at the second user device;
receiving a second telephone call;
associating the second telephone call with said second identifier; and,
displaying the second identifier in conjunction with the associated second telephone call.

**13.** The method of Claim 12, wherein the identifier and second identifier are different.

**14.** The method of Claim 1, further comprising:
receiving a request for a second electronic document from the user device;
providing the requested second electronic document to the user device;
wherein, said identifier is automatically incorporated into said second electronic document at the user device.

**15.** The method of Claim 14, wherein the electronic document and second electronic document are associated with a common website.

**16.** The method of Claim 14, wherein the electronic document and second electronic document are associated with different websites.

**17.** A method for managing information comprising:
transmitting electronic documents to a plurality of computing devices via a computer network;
transmitting code to the computing devices, wherein the code, when executed by the computing devices, transmits data associated with the computing devices to at least one server;
storing the transmitted data associated with each of the computing devices and at least some of the electronic documents using the at least one server;
receiving a telephone call;
associating at least one portion of the stored data with the telephone call; and
displaying the at least one portion of the stored data concurrently with the received telephone call.

**18.** The method of Claim 17, further comprising appending the stored data with additional data associated with the telephone call.

**19.** The method of Claim 18, further comprising prompting the telephone caller for a portion of the stored data.
